# FASCICULE DE BREVET EUROPEEN

(11) **EP 0 852 924 B1**
(45) Date de publication et mention de la délivrance du brevet: **07.05.2003**
(21) Numéro de dépôt: 98400003.4
(22) Date de dépôt: 05.01.1998
(51) Int. Cl.: A47J 45/07

(54) **Dispositif de préhension pour ustensile de cuisson**
Griffelement für Kochgeschirr
Gripping element for cooking utensil

(30) Priorité: 08.01.1997 FR 9700091
(43) Date de publication de la demande: 15.07.1998
(73) Titulaire: DJA DODANE JEAN ET ASSOCIES DJA CRISTEL, 25490 Fesches le Chatel (FR)
(72) Inventeur: Dodane, Paul, 25400 Exincourt (FR)
(74) Mandataire: Le Bras, Hervé

(56) Documents cités:
- DE-A- 1 814 261
- DE-A- 2 510 894
- FR-A- 2 579 444
- US-A- 2 802 688

## Description

L'invention concerne le domaine des ustensiles de cuisson comportant au moins une anse recourbée vers l'extérieur et formant plaque de préhension.

Pour manipuler ces ustensiles de cuisson, il est courant d'utiliser des poignées amovibles en forme de manche. L'amovibilité de la poignée permet de diminuer fortement l'encombrement global de l'ustensile, par exemple lorsque l'ustensile sert à la cuisson dans un four, et ou lors de son nettoyage dans une machine à laver ou pour le rangement.

Il est déjà connu des poignées amovibles qui peuvent coopérer avec l'anse de l'ustensile, cet anse comportant une lumière pour recevoir un crochet, bec ou tout autre élément fixe de la poignée, et qui comportent un organe coulissant monté sur la poignée et se verrouillant sur l'anse.

Les documents FR-A-2 397 817 et FR-A-2 579 444 décrivent de telles poignées. Dans ces documents, l'organe coulissant est chargé par un ressort hélicoïdal logeant dans une cavité ménagée dans la poignée. Cette dernière présente ainsi une épaisseur notable, et par le fait même un poids non négligeable qui peut entraîner un déséquilibre de l'ustensile, lorsque ce dernier a un faible diamètre. D'autre part, les dimensions du ressort et de la cavité favorisent l'introduction de crasse dans la poignée et peuvent entraîner des problèmes d'hygiène.

Le but de l'invention est de proposer une poignée extra plate dans laquelle le volume de la cavité réceptrice du ressort est très faible.

DE 25 10 894 (base pour le préambule de la revendication 1) dévoile un dispositif de préhension pour ustensile de cuisson présentant au moins une anse recourbée vers l'extérieur et dans laquelle est ménagée une lumière sensiblement parallèle au bord interne de l'anse, ledit dispositif de préhension comportant une poignée munie d'un bec à double cambrage susceptible d'être introduit dans la lumière de l'anse par le dessus, un organe de verrouillage - déverrouillage monté sur ladite poignée de manière à pouvoir coulisser dans la direction de l'axe de la poignée et des moyens élastiques pour repousser l'organe de verrouillage vers le bec, ledit organe de verrouillage - déverrouillage présentant un poussoir de commande sur la face supérieure de la poignée, un verrou destiné à coopérer avec le bord externe de l'anse sur la face inférieure de la poignée et un coulisseau reliant le poussoir au verrou.

Selon l'invention ce dispositif de préhension est caractérisé par le fait que la poignée est constituée d'une plaque monobloc présentant à l'une de ses extrémités le bec à double cambrage et comportant une lumière oblongue pour le guidage du coulisseau et par le fait que les moyens élastiques sont constitués d'un ressort en forme de α dont la boucle est traversée par le coulisseau et dont les branches sont en appui sur des butées solidaires de la plaque, ladite boucle logeant dans un évidement ménagé dans la face inférieure du poussoir.

Les avantageuses dispositions suivantes sont en outre adoptées :
- L'organe de verrouillage - déverrouillage est de révolution autour d'un axe perpendiculaire au plan général de la plaque ;
- l'organe de verrouillage - déverrouillage est constitué de deux pièces réalisées par décolletage et présentant respectivement un élément mâle et un élément femelle pour leur liaison par vissage ;
- la plaque comporte sur sa face inférieure deux butées latérales fixes disposées de part et d'autre du verrou et destinées à venir en appui sur le bord externe de l'anse ;
- les butées du ressort peuvent être constituées par des tétons émergeant dans l'évidement du poussoir, ou par des parois de trous débouchant dans l'évidement du poussoir et dans lesquels logent les extrémités recourbées à 90° des branches du ressort en forme de α.

D'autres avantages et caractéristiques de l'invention ressortiront à la lecture de la description suivante faite à titre d'exemple et en référence aux dessins annexés dans lesquels :
la figure 1 est une coupe longitudinale du dispositif de préhension selon l'invention, en position d'utilisation sur l'anse d'un ustensile de cuisson ;
la figure 2 est une vue de dessus du dispositif de préhension de la figure 1 selon une première variante de réalisation, le poussoir étant montré en coupe selon la ligne II-II de la figure 1 ;
la figure 3 est une coupe transversale selon la ligne III-III de la figure 2 ;
la figure 4 est une coupe du poussoir selon un plan passant par son axe ;
la figure 5 est une coupe du verrou selon un plan passant par son axe;
la figure 6 est une vue de dessus du dispositif de préhension de la figure 1, selon une deuxième variante de réalisation, le poussoir étant montré en coupe selon la ligne II-II de la figure 1 ;
la figure 7 est une coupe transversale selon la ligne VII-VII de la figure 6.

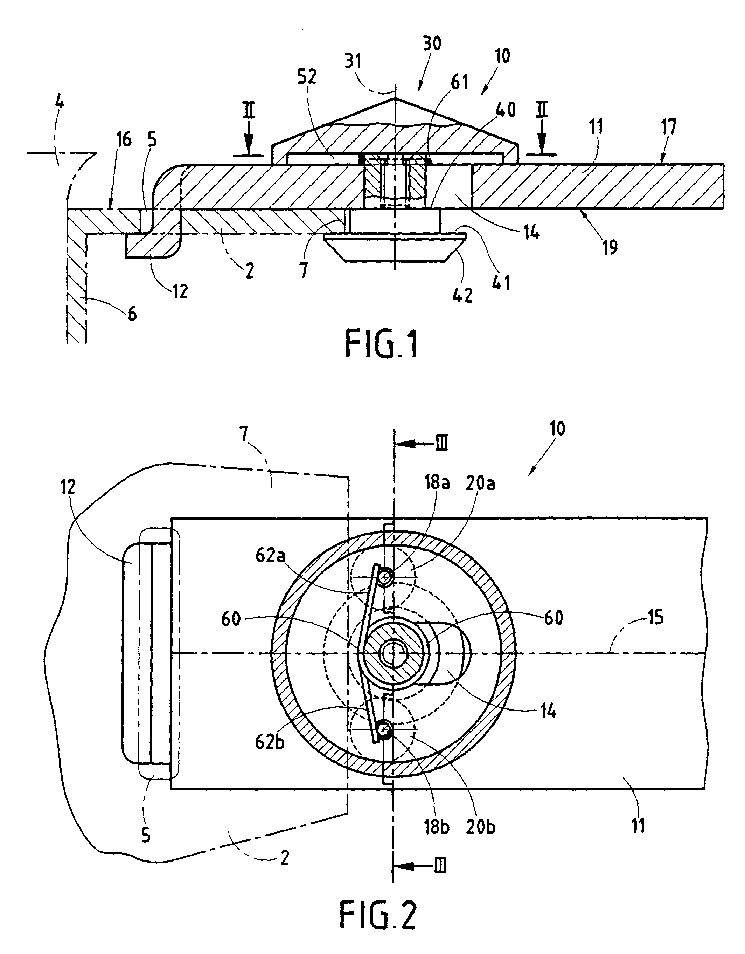

La figure 1 montre l'anse 2 d'un ustensile de cuisson dont seule une partie de paroi périphérique 4 est montrée. Cette anse 2 comporte une lumière 5 sensiblement parallèle à son bord interne 6. L'anse 2 s'étend vers l'extérieur de l'ustensile sensiblement à l'horizontale et présente un bord externe 7 sensiblement parallèle au bord interne 6.

La référence 10 désigne une poignée amovible servant à la préhension de l'ustensile de cuisson.

Cette poignée amovible 10 comporte une plaque monobloc 11 rigide et de faible épaisseur, qui présente à l'une de ses extrémités un bec 12 à double cambrage qui est susceptible de pénétrer par le dessus de l'anse 2 dans la lumière 5. La largeur du bec 12 est inférieure à la largeur de la plaque 11 et sensiblement égale à la longueur de la lumière 5.

La plaque 11 présente en outre une lumière oblongue 14 qui s'étend dans l'axe 15 de la plaque 11 et qui est disposée à l'extérieur de l'anse 2, lorsque le bec 12 est introduit dans la lumière 5 de l'anse 2, la plaque 11 étant alors en appui sur la face supérieure 16 de l'anse 2, ainsi que cela est représenté sur la figure 1.

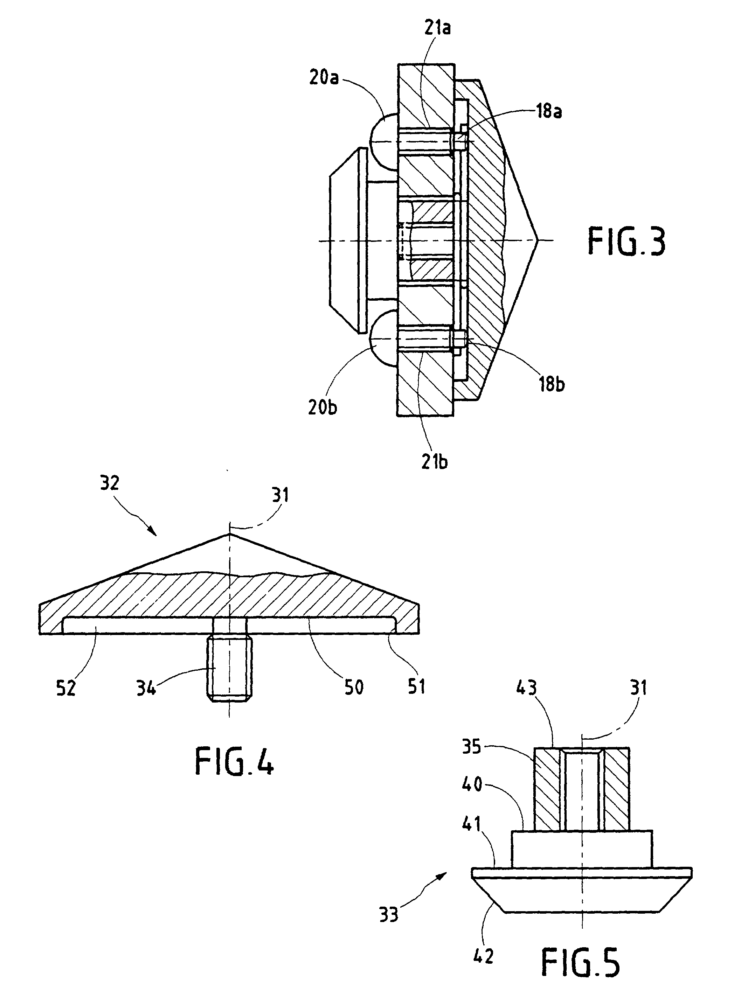

Selon une première variante de réalisation, montrée sur les figures 2 et 3, la plaque 11 présente, sur sa face supérieure 17 et de part et d'autre de la lumière oblongue 14, deux tétons 18a, 18b dont l'utilité sera expliquée plus loin et, sur sa face inférieure 19, également de part et d'autre de la lumière oblongue 14, deux butées 20a, 20b destinées à venir en appui sur le bord externe 7 de l'anse 2. Les butées 20a et 20b peuvent être constituées par les têtes de deux vis fixées dans des alésages 21a, 21b ménagés dans la plaque 11. Les tétons 18a et 18b peuvent être formés par les extrémités de ces vis, mais ils peuvent également être réalisés par emboutissage de la plaque 11. De même, les butées 20a et 20b peuvent être formées par des têtes de rivets.

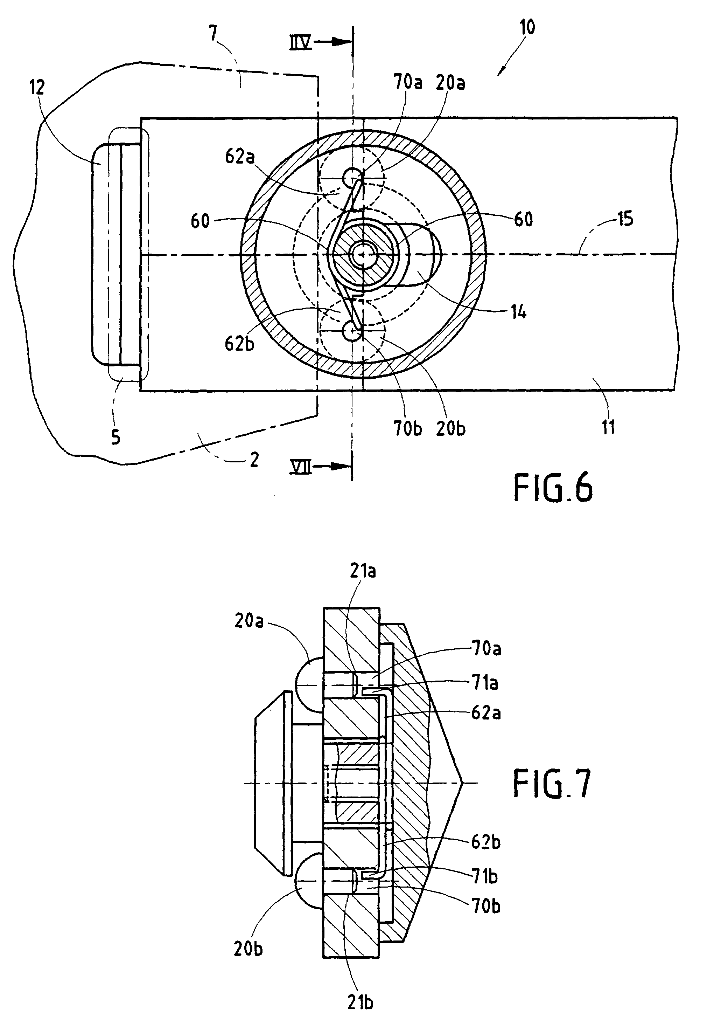

Selon une deuxième variante de réalisation, montrée sur les figures 6 et 7, la plaque 11 présente deux trous 70a, 70b qui débouchent sur sa face supérieure 17, de part et d'autre de la lumière oblongue 14. Ces trous 70a, 70b traversent la plaque 11, et servent à la fixation de deux butées 20a, 20b émergeant sur la face inférieure 19 de la plaque 11 et destinées à venir en appui sur le bord externe 7 de l'anse 2. Comme dans le premier mode de réalisation, les butées 20a, 20b peuvent être constituées par les têtes de deux vis ou rivets fixées dans les alésages 21a, 21b traversant la plaque 11 et dont les portions supérieures constituent les trous 70a, 70b. La fixation des butées 20a, 20b peut être faite par vissage, emmanchement de force ou soudage.

Un organe de verrouillage - déverrouillage 30 est monté coulissant sur la plaque 11.

Cet organe 30 est de révolution autour d'un axe de révolution 31 perpendiculaire aux faces supérieure 17 et inférieure 19 de la plaque 11. Il est constitué de deux pièces 32 et 33 qui présentent respectivement un élément mâle 34 et un élément femelle 35 pour leur liaison par vissage à travers la lumière oblongue 14 de la plaque 11. L'élément femelle 35 a sensiblement un diamètre égal à la largeur de la lumière 14 afin de pouvoir coulisser dans cette lumière dans la direction de l'axe 15 de la plaque 11.

La pièce 33 qui présente l'élément femelle 35 traversant la lumière oblongue 14 constitue le dispositif de verrouillage de l'organe de verrouillage - déverrouillage 30. Elle comporte un premier épaulement annulaire 40 en appui coulissant sur la face inférieure 19 de la plaque 11 et un deuxième épaulement annulaire 41, écarté du premier épaulement 40 d'une distance au moins égal à l'épaisseur de l'anse 2, et d'un diamètre supérieur à celui du premier épaulement 40. Le deuxième épaulement annulaire 41 forme le verrou de l'organe du verrouillage - déverrouillage. La paroi 42 de la pièce 33 opposée à l'élément femelle 35 par rapport au deuxième épaulement annulaire 41 est de forme conique afin de permettre le verrouillage automatique de l'organe 30 par basculement de la plaque 11 autour du bec 12 introduit dans la lumière 5 de l'anse 2 sous l'action d'un ressort décrit plus loin dans le présent mémoire.

La pièce 32 qui comporte l'élément mâle 34 se présente sous la forme d'une cône d'axe 31 qui présente à la périphérie de sa base 50 un bourrelet annulaire 51 qui coulisse sur la face supérieure 17 de la plaque 11, et qui délimite, avec la base 50 et la face supérieure 17, un évidement annulaire 52 entourant l'élément mâle 34.

Le diamètre de la base 50 est calculé de telle manière que le bourrelet 51 entoure la lumière oblongue 14 de la plaque 11 quelle que soit la position de l'organe de verrouillage - déverrouillage 30 par rapport à cette lumière.

Un ressort 60 en forme de α, dont la boucle 61 est traversée par l'élément mâle 34 loge dans l'évidement 52.

Selon le premier mode de réalisation montré sur les figures 2 et 3, les branches divergentes 62a, 62b du ressort 60 sont respectivement en butée sur les tétons 18a et 18b décrits plus haut dans le présent mémoire et qui émergent dans l'évidement annulaire 52.

Selon le deuxième mode de réalisation montré sur les figures 6 et 7, les extrémités 71a, 71b des branches divergentes 62a, 62b du ressort 60 sont repliées à 90° par rapport au plan de la boucle 61, et logent dans les trous 70a, 70b qui débouchent dans l'évidement annulaire 52.

Ce ressort 60 agit sur l'organe de verrouillage - déverrouillage 30 de manière à déplacer ce dernier vers le bec 12 dans la direction de l'axe 15.

De préférence la longueur de l'élément femelle 35 est supérieure à l'épaisseur de la plaque 11 et, la boucle 61 du ressort 60 entoure l'extrémité 43 de l'élément femelle 35.

La partie conique 53 de la pièce 32 constitue le poussoir de commande du verrou 41, afin de déverrouiller l'organe de verrouillage - déverrouillage. En effet, lorsque l'utilisateur repousse la pièce 32, avec le pouce, à l'encontre de la force du ressort 60, afin de l'éloigner du bec 12, le verrou 41 s'éloigne du bord 7 de l'anse 2, et l'utilisateur peut désolidariser la plaque 11 de l'anse 2 en le basculant vers le haut autour de l'axe d'articulation du bec 12 dans la lumière 5.

L'invention décrite ci-dessus permet de fournir une poignée amovible très plate et d'un coût de construction peu élevé, du fait que les pièces 32 et 33 peuvent être réalisées notamment par décolletage.

D'autre part, le volume de l'évidement 52 peut être faible, du fait que le ressort 60 utilisé est de type α.

Le montage de l'organe de verrouillage - déverrouillage 30 sur la plaque 11 se réalise de la manière suivante. On introduit l'élément femelle 35 de la pièce 33 dans la lumière oblongue 14 par la face inférieure 19 de la plaque 11. Puis, on monte le ressort 60 sur l'extrémité de l'élément femelle 35 qui émerge sur la face supérieure 17 de la plaque 11, les extrémités des branches divergentes 62a, 62b étant en appui sur les tétons 18a, 18b ou sur les parois délimitant les trous 70a, 70b. Il suffit ensuite de visser l'élément mâle 34 de la pièce 32 dans l'alésage de l'élément femelle 35.

## Revendications

1. Dispositif de préhension (10) pour ustensile de cuisson présentant au moins une anse (2) recourbée vers l'extérieur et dans laquelle est ménagée une lumière (5) sensiblement parallèle au bord interne (6) de l'anse (2),
ledit dispositif de préhension comportant une poignée (10) amovible munie d'un bec (12) à double cambrage susceptible d'être introduit dans la lumière (5) de l'anse par le dessus, un organe de verrouillage - déverrouillage (30) monté sur ladite poignée de manière à pouvoir coulisser dans la direction de l'axe (15) de ladite poignée (10) et des moyens élastiques pour repousser l'organe de verrouillage - déverrouillage vers le bec (12), ledit organe de verrouillage - déverrouillage (30) présentant un poussoir de commande (53) sur la face supérieure (17) de la poignée, un verrou (41) destiné à coopérer avec le bord externe (7) de l'anse (2) sur la face inférieure (19) de la poignée (10) et un coulisseau reliant le poussoir (53) au verrou (41), **caractérisé par le fait que** la poignée (10) est constituée d'une plaque (11) monobloc présentant à l'une de ses extrémités le bec (12) à double cambrage et comportant une lumière oblongue (14) pour le guidage du coulisseau, et **par le fait que** les moyens élastiques sont constitués d'un ressort (60) en forme de α dont la boucle (61) est traversée par le coulisseau, et dont les branches (62a, 62b) sont en appui sur des butées (20a, 20b, 70a, 70b) solidaires de la plaque (11), ladite boucle logeant dans un évidement (52) ménagé dans la face inférieure du poussoir (53).

2. Dispositif de préhension selon la revendication 1, **caractérisé par le fait que** l'organe de verrouillage - déverrouillage (30) est de révolution autour d'un axe (31) perpendiculaire au plan général de la plaque (11).

3. Dispositif de préhension selon la revendication 2, **caractérisé par le fait que** l'organe de verrouillage - déverrouillage (30) est constitué de deux pièces (32, 33) présentant respectivement un élément mâle (34) et un élément femelle (35) pour leur liaison par vissage.

4. Dispositif selon la revendication 3, **caractérisé par le fait que** les deux pièces sont réalisées par décolletage.

5. Dispositif de préhension selon l'une quelconque des revendications 1 à 4, **caractérisé par le fait que** les butées des branches (62a, 62b) du ressort (60) sont constituées par des tétons (18a, 18b) formés sur la face supérieure (17) de la plaque (11) et émergeant dans l'évidement (52) du poussoir (53).

6. Dispositif de préhension selon l'une quelconque des revendication 1 à 4, **caractérisé par le fait que** les butées des branches (62a, 62b) du ressort (60) sont constituées par des parois de trous (70a, 70b) ménagés dans la plaque (11) et débouchant dans l'évidement (52) du poussoir (53) et dans lesquels logent les extrémités (71a, 71b) recourbées à 90° des branches (62a, 62b) du ressort (60).

7. Dispositif de préhension selon l'une quelconque des revendications 1 à 6, **caractérisé par le fait que** la plaque (11) comporte sur sa face inférieure (19) deux butées (20a, 20b) latérales fixes disposées de part et d'autre du verrou (42) et destinées à venir en appui sur le bord externe (7) de l'anse (2).

## Claims

1. Gripping device (10) for a cooking utensil having at least one handle (2) curved towards the outside and in which is made an aperture (5) which is substantially parallel to the inner edge (6) of the handle (2), the said gripping device comprising a detachable handgrip (10) provided with a lip (12) with a double curve capable of being inserted into the aperture (5) of the handle from the top, a locking-unlocking component (30) mounted on the said handgrip so that it can slide in the direction of the axis (15) of the said handgrip (10) and elastic means for pushing the locking-unlocking component back towards the lip (12), the said locking-unlocking component (30) having a control pusher (53) on the upper face (17) of the handgrip, a lock (41) intended to engage with the outer edge (7) of the handle (2) on the lower face (19) of the handgrip (10) and a slider connecting the pusher (53) to the lock (41), **characterized in that** the handgrip (10) consists of a plate (11) made as one piece having the lip (12) with a double curve at one of its ends and comprising an oblong aperture (14) for guiding the slider, and **in that** the elastic means consist of a spring (60) in the shape of an α, the loop (61) of which is passed through by the slider, and the arms (62a, 62b) of which press on stops (20a, 20b, 70a, 70b) secured to the plate (11), the said loop being housed in a recess (52) made in the lower face of the pusher (53).

2. Gripping device according to Claim 1, **characterized in that** the locking-unlocking component (30) is axisymmetric about an axis (31) perpendicular to the general plane of the plate (11).

3. Gripping device according to Claim 2, **characterized in that** the locking-unlocking component (30) consists of two parts (32, 33) respectively having a male element (34) and a female element (35) to connect them by screwing.

4. Gripping device according to Claim 3, **characterized in that** the two parts are made by bar turning.

5. Gripping device according to any one of Claims 1 to 4, **characterized in that** the stops of the arms (62a, 62b) of the spring (60) consist of lugs (18a 18b) formed on the upper face (17) of the plate (11) and emerging in the recess (52) of the pusher (53).

6. Gripping device according to any one of Claims 1 to 4, **characterized in that** the stops of the arms (62a, 62b) of the spring (60) consist of walls of holes (70a, 70b) made in the plate (11) and opening out in the recess (52) of the pusher (53) and in which are housed the ends (71a, 71b), curved by 90°, of the arms (62a, 62b) of the spring (60).

7. Gripping device according to any one of Claims 1 to 6, **characterized in that** on its lower face (19) the plate (11) comprises two side stops (20a, 20b) placed on either side of the lock (42) and intended to press on the outer edge (7) of the handle (2).

## Patentansprüche

1. Griffelement (10) für Kochgeschirr, das mindestens einen Griff (2) aufweist, der nach außen gebogen und in dem ein Schlitz (5) im Wesentlichen parallel zum Innenrand (6) des Griffs (2) angeordnet ist,
besagtes Griffelement umfassend einen abnehmbaren Handgriff (10), der mit einer zweifach gebogenen Nase (12) versehen ist, geeignet dazu, in den Schlitz (5) des Griffs von oben eingesetzt zu werden, ein Organ zur Verriegelung - Entriegelung (30), das auf dem besagten Handgriff derartig montiert ist, dass es in Richtung der Achse (15) des besagten Handgriffs (10) verschoben werden kann, und elastische Mittel, um das Organ zur Verriegelung - Entriegelung in Richtung der Nase (12) hin zurück zu schieben, wobei das besagte Organ zur Verriegelung - Entriegelung (30) einen Steuerknopf (53) auf der Oberseite (17) des Handgriffs aufweist, einen Riegel (41) auf der Unterseite (19) des Handgriffs (10), der zum Zusammenschluss mit dem Außenrand (7) des Griffs (2) bestimmt ist, und einen den Knopf (53) mit dem Riegel (41) verbindenden Schieber,
**dadurch gekennzeichnet,**
**dass** der Handgriff (10) aus einer einstückigen Platte (11) besteht, die an einem ihrer Enden die zweifach gekrümmte Nase (12) aufweist und einen länglichen Schlitz (14) zur Führung des Schiebers umfasst,
und dadurch, dass die elastischen Mittel aus einer Feder (60) in Form eines α bestehen, deren Schlinge (61) von dem Schieber durchsetzt wird, und deren Schenkel (62a, 62b) auf mit der Platte (11) verbundenen Anschlägen (20a, 20b, 70a, 70b) aufgestützt sind, wobei die besagte Schlinge in eine Aussparung (52) eingesetzt ist, die in der Unterseite des Knopfes (53) angelegt ist.

2. Griffelement nach Anspruch 1, **dadurch gekennzeichnet, dass** das Organ zur Verriegelung - Entriegelung (30) umlaufend um eine zur Hauptebene der Platte (11) senkrechten Achse (31) ist.

3. Griffelement nach Anspruch 2, **dadurch gekennzeichnet, dass** das Organ zur Verriegelung - Entriegelung (30) aus zwei Stücken (32, 33) besteht, die jeweils ein männliches Element (34) bzw. ein weibliches Element (35) für ihre Verbindung durch Verschraubung aufweisen.

4. Griffelement nach Anspruch 3, **dadurch gekennzeichnet, dass** die zwei Stücke in Drehtechnik realisiert sind.

5. Griffelement nach einem der vorhergehenden Ansprüche 1 bis 4, **dadurch gekennzeichnet, dass** die Anschläge der Schenkel (62a, 62b) der Feder (60) aus Vorsprüngen (18a, 18b) bestehen, die auf der Oberseite (17) der Platte (11) angeordnet sind und in die Aussparung (52) des Knopfes (53) hervorragen.

6. Griffelement nach einem der vorhergehenden Ansprüche 1 bis 4, **dadurch gekennzeichnet, dass** die Anschläge der Schenkel (62a, 62b) der Feder (60) aus Lochwänden (70a, 70b) bestehen, die in der Platte (11) angebracht sind und in die Aussparung (52) des Knopfes (53) münden, und in denen die um 90° gebogenen Enden (71a, 71b) der Schenkel (62a, 62b) der Feder (60) eingesetzt sind.

7. Griffelement nach einem der vorhergehenden Ansprüche 1 bis 6, **dadurch gekennzeichnet, dass** die Platte (11) auf ihrer Unterseite (19) zwei seitliche Anschläge (20a, 20b) umfasst, die fest auf beiden Seiten des Riegels (42) angeordnet und dazu vorgesehen sind, auf dem Außenrand (7) des Griffs (2) in Anlage zu kommen.
